# FASCICULE DE BREVET EUROPEEN

(11) **EP 0 394 096 B1**
(45) Date de publication et mention de la délivrance du brevet: **02.02.1994**
(21) Numéro de dépôt: 90400977.6
(22) Date de dépôt: 10.04.1990
(51) Int. Cl.: H04N 1/32

(54) **Terminal vidéotex pouvant recevoir des télécopies**
Bildschirmtext-Endgerät, fähig zum Faksimile-Empfang
Videotex terminal capable of telecopy reception

(30) Priorité: 13.04.1989 FR 8904895; 18.07.1989 FR 8909613
(43) Date de publication de la demande: 24.10.1990
(73) Titulaire: SOCIETE D'APPLICATIONS GENERALES D'ELECTRICITE ET DE MECANIQUE SAGEM, F-75783 Paris Cédex 16 (FR)
(72) Inventeur: Penalver, Georges, F-78700 Conflans Sainte Honorine (FR)
(74) Mandataire: Bloch, Gérard

(56) Documents cités:
- EP-A- 0 208 852
- EP-A- 0 222 919
- EP-A- 0 310 001
- FR-A- 2 607 646
- GB-A- 2 169 174
- US-A- 4 734 780
- PATENT ABSTRACTS OF JAPAN, vol. 6, no. 238 (E-144)[1116], 26 novembre 1982; & JP-A-57 138 269 (NIPPON DENSHIN DENWA KOSHA) 26-08-1982
- COMMUNICATION & TRANSMISSION, vol. 9, no. 2, 1987, pages 57-60, Paris, FR; "Le terminal télématique agora"

## Description

La présente invention a pour objet un terminal vidéotex raccordable à un réseau téléphonique, pour demander et recevoir des pages de caractères en provenance d'un centre serveur également raccordé audit réseau, et comprenant:
- un clavier de commande,
- un écran de visualisation, et,
- un modem pourvu d'une entrée reliée audit clavier, d'une sortie reliée audit écran, et d'un accès bidirectionnel raccordable à une ligne téléphonique dudit réseau, ledit modem étant normalement prévu pour transmettre des données en provenance dudit centre à une première vitesse, et des données vers ledit centre à une deuxième vitesse.

Un tel terminal, bien connu en France sous le nom de "Minitel", permet notamment à des particuliers ou à des entreprises l'accès à toutes sortes d'informations contenues dans des banques de données auxquelles peuvent être reliés les centres serveurs, ou encore l'accès à un certain nombre de services susceptibles d'être rendus par ces centres serveurs.

Les informations que l'utilisateur d'un tel terminal reçoit sur son écran sont sous forme de pages de caractères, étant entendu que par "caractère", on entend ici non seulement les caractères alphanumériques classiques, mais aussi un certain nombre de symboles permettant de faire apparaître sur l'écran certains graphismes simples. Ces symboles sont en nombre limité et sont traités, en fait, comme des caractères alphanumériques, c'est à dire que chacun d'entre eux est codé avant transmission, par exemple sous la forme d'un groupe de 7 éléments binaires, ou bits, ce groupe de bits étant décodé après transmission et restitué à l'écran sous la forme du symbole correspondant. Compte-tenu du nombre limité de ces symboles, il est évident que les graphismes qui peuvent ainsi être restitués sont sommaires, ainsi que tout utilisateur d'un "Minitel" a pu s'en rendre compte. Pour cette raison, ces symboles sont souvent qualifiés de "semi-graphiques".

Si l'utilisateur d'un terminal "Minitel" souhaite conserver une trace des informations visualisées sur l'écran, il lui est possible de connecter, sur la prise péri-informatique prévue sur le terminal pour le raccordement d'équipements de type périphérique, une imprimante susceptible d'effectuer une recopie d'écran. Naturellement, les graphismes ainsi imprimés sont rigoureusement identiques à ceux qui apparaissent sur l'écran, l'imprimante étant prévue pour effectuer, en sortie du modem, la conversion des groupes de 7 bits en caractères et symboles semi-graphiques à imprimer.

La procédure de communication des données prévoit que le modem est bidirectionnel, la rapidité de modulation autorisant des échanges simultanés à une vitesse V₁ dans un sens et à une vitesse inférieure V₂ dans l'autre sens. Les données qui proviennent du centre serveur, qui sont normalement les plus nombreuses, sont ainsi transmises à la vitesse V₁ qui vaut 1200 bauds, tandis que les données émises par le terminal "Minitel" vers le centre serveur, qui sont normalement de simples informations de commande, sont transmises à la vitesse V₂ qui vaut 75 bauds. Dans certains cas, il est possible de "retourner" le modem, pour utiliser la vitesse V₂ à la réception et la vitesse V₁ à l'émission. Les données sont transmises, en principe, par groupes de 7 bits d'information utile, en mode asynchrone, 10 bits au total étant nécessaires par groupe de 7 bits utiles. En effet, un groupe de 7 bits utiles est précédé d'un bit de synchronisation ou bit de départ ("start") et suivi d'un bit de parité et d'un bit d'arrêt ("stop").

Par ailleurs, pour permettre aux particuliers et aux entreprise d'échanger des informations véritablement graphiques, comme un document manuscrit, un schéma explicatif, un plan de construction ou tout autre image fixe, il existe des appareils de télécopie, ou télécopieurs.

Dans un télécopieur utilisé à l'émission, le document comportant l'image à transmettre est analysé de façon fine, pour que chacun de ses éléments d'image, ou pixel, se trouve individuellement codé. Après compression des informations résultant de cette analyse, les données correspondantes, que l'on peut véritablement qualifier de "données graphiques", sont transmises par l'intermédiaire d'un modem sur le réseau téléphonique, à destination d'un autre télécopieur utilisé à la réception. Celui-ci est pourvu, en sortie de son propre modem, d'un circuit de réception de ces données graphiques qui en effectue notamment la décompression et le décodage et commande une imprimante, par exemple une imprimante thermique, qui restitue l'image d'origine, avec une très bonne résolution, à l'heure actuelle de 8 points par millimètre, par exemple.

La procédure de communication en télécopie comprend, pour chaque envoi, des phases de protocole qui encadrent la phase de transfert, au cours de laquelle un flux de données graphiques est transmis du télécopieur émetteur vers le télécopieur récepteur. Il est prévu, pendant les phases de protocole, des échanges simultanés dans les deux sens à la même vitesse de 300 bauds. Au cours de la première procédure de protocole qui précède le transfert proprement dit, les télécopieurs en communication échangent notamment des informations relatives à leurs identifications et à leurs possibilités respectives. Ils procèdent également à un essai ("training") qui leur permet d'évaluer, compte-tenu de la qualité de la ligne téléphonique qui les relie, la vitesse maximale à laquelle pourra avoir lieu le transfert, cette vitesse pouvant être par exemple de 2400, 4800, 7200 ou 9600 bauds à l'heure actuelle. Après la phase de transfert qui a lieu, en mode synchrone, à la vitesse déterminée au cours de l'essai, a lieu une deuxième phase de protocole qui permet notamment l'émission d'un accusé de réception et la libération de la ligne. Les performances des modems utilisés dans les télécopieurs sont donc prévues pour qu'ils assurent les fonctions précédentes.

A l'heure actuelle, un particulier ou une entreprise qui souhaite conserver une trace écrite des informations qu'il reçoit par l'intermédiaire du vidéotex, et qui souhaite pouvoir recevoir de certains de ses correspondants des documents d'une bonne qualité graphique doit donc être équipé d'une part d'un terminal "Minitel" pourvu d'une imprimante de recopie d'écran et d'autre part d'un télécopieur. Une telle installation est d'un prix de revient relativement élevé. De plus, si cet utilisateur ne dispose que d'une seule ligne téléphonique pour recevoir les appels relatifs à des conversations téléphoniques et ceux relatifs à des télécopies, il ne peut recevoir de télécopies qui si une personne est présente auprès du combiné téléphonique au moment où celui-ci sonne, pour raccorder manuellement la ligne téléphonique au télécopieur si l'appel est relatif à la transmission d'une télécopie. Enfin, si cet utilisateur à besoin d'informations graphiques d'une certaine qualité, donc non susceptibles d'être restituées par l'écran "Minitel" et par l'imprimante de recopie d'écran et qui sont détenues par une banque de données, il doit demander, au cours d'une conversation téléphonique avec un opérateur de cette banque de données, ou éventuellement au cours d'un échange par "Minitel", que cette banque de données veuille bien le rappeler pour lui envoyer ces informations graphiques par télécopie. Dans un cas comme dans l'autre, il doit interrompre sa communication, libérer la ligne, et attendre l'appel de la banque de données pour raccorder son télécopieur. Une telle procédure est particulièrement lourde, pour l'utilisateur comme pour la banque de données.

La présente invention vise notamment à pallier les inconvénients précédents.

A cet effet, elle a pour objet un terminal vidéotex du type défini ci-dessus, caractérisé par le fait que:
- il comprend des moyens, reliés à la sortie dudit modem, pour imprimer des images fixes en réponse à des premières données graphiques en provenance d'une source telle qu'un centre serveur graphique ou un télécopieur raccordé audit réseau, et,
- ces moyens étant adaptés pour réaliser une procédure de communication desdites premières données graphiques qui comprend des phases de protocole, au cours desquelles ledit terminal et ladite source échangent des questions et des réponses sous forme de données transmises à la dite première vitesse par l'intermédiaire du modem utilisé alternativement dans un sens et dans l'autre, et des phases de transfert, au cours desquelles un flux de premières données graphiques est transmis par ledit modem, à la dite première vitesse, en provenance de la source vers ledit terminal,et des données de régulation dudit flux sont transmises par ledit modem, à la dite deuxième vitesse, en provenance dudit terminal vers ladite source.

Dans le terminal de l'invention, la procédure de communication prévue pour le transfert de données graphiques fait que le modem normalement prévu pour la transmission de données relatives à des caractères alphanumériques ou semi-graphiques, sert également à transmettre ces données graphiques, qui sont du même type que celles qui sont transmises habituellement en télécopie, mais selon une procédure différente. Il en résulte un premier avantage, relatif à la réduction du prix de revient de l'installation précédente, puisque celle-ci n'utilise notamment qu'un seul modem, et un seul équipement de ligne associé, au lieu de deux.

Toutefois, le terminal de l'invention présente un autre avantage important, relatif au fait qu'il permet au cours d'un unique échange, échange souvent appelé session par l'homme du métier, de demander à une banque de données, à l'aide du clavier et par les commandes vidéotex habituelles, l'envoi de véritables informations graphiques, pour leur restitution par les moyens d'impression. La qualité de cette restitution peut être très bonne, si les moyens d'impression comprennent par exemple une imprimante thermique du même type que celle utilisée actuellement dans les télécopieurs. Une telle banque de données, susceptible de fournir de véritables informations graphiques sera accessible par un centre serveur appelé dans la suite centre serveur graphique.

La simplicité de cette procédure et son automatisation possible du côté de la banque de données augmentent notablement le champ des informations et services susceptibles d'être offerts par les centres serveurs. C'est ainsi que des cartes et plans géographiques, partitions musicales, plans d'appartement, textes en alphabet non-latin, formules mathématiques, structures moléculaires... peuvent être ainsi transmis. Les données transmises peuvent résulter d'une analyse, faite par un télécopieur adapté, de documents représentant les images à transmettre, mais elles peuvent également être engendrées directement par un système informatique, ce qui procure évidemment une qualité d'image encore meilleure que celle connue actuellement pour les télécopies, puisque la dégradation liée à l'analyse des documents de départ se trouve ainsi évitée.

Dans une première forme de réalisation, il est prévu:
- des moyens de détection d'un appel, disposés sur ladite ligne téléphonique,
- des moyens pour raccorder ladite ligne téléphonique audit accès du modem, en réponse à un appel détecté,
- des moyens d'alarme, et,
- des moyens, reliés à la sortie dudit modem, pour détecter une demande de transmission de premières données graphiques, et pour commander, en cas de demande de transmission de premières données graphiques, lesdits moyens d'impression et, en cas d'absence de détection de demande de transmission de premières données graphiques, lesdits moyens d'alarme.

Dans ce cas, le terminal répond automatiquement aux appels, et une télécopie peut être reçue sans intervention manuelle et sans que l'utilisateur n'ait à renoncer à la possibilité de recevoir des appels relatifs à de simples conversations téléphoniques.

Avantageusement, il est prévu des moyens, reliés à la sortie dudit modem, pour convertir en données graphiques des données représentant des caractères à afficher sur ledit écran, et pour commander lesdits moyens d'impression afin qu'ils restituent une copie dudit écran en réponse aux données converties.

Dans ce cas, l'imprimante permet à la fois la restitution de documents ou d'images transmis par télécopie, et la recopie des pages de caractères ou de symboles semi-graphiques apparaissant sur l'écran en mode vidéotex.

Avantageusement encore, il est prévu des moyens pour analyser des images fixes, pourvus d'une sortie reliée à ladite entrée du modem et délivrant des deuxièmes données graphiques, pour transmettre lesdites deuxièmes données graphiques en vue de la restitution à distance des images fixes analysées, et la procédure de communication desdites deuxièmes données graphiques est identique à celles desdites premières données graphiques, avec retournement du sens dudit modem.

Dans ce cas, le terminal, en plus de ses fonctions de terminal vidéotex, a des fonctions identiques à celle d'un télécopieur, puisqu'il permet d'émettre comme de recevoir des télécopies.

Avantageusement encore, il est prévu des moyens interrupteurs pour couper,pendant les périodes de repos dudit terminal, l'alimentation en énergie électrique dudit terminal, à l'exception desdits moyens de détection d'appel, et lesdits moyens interrupteurs sont commandés par lesdits moyens de détection d'appel pour rétablir l'alimentation en énergie électrique en réponse à une détection d'appel.

Un tel terminal est donc particulièrement économique en consommation d'énergie électrique, tout en demeurant susceptible de recevoir et de traiter, même en l'absence de tout utilisateur, les appels qui arrivent sur la ligne.

Dans la première forme de réalisation dont il vient d'être question, le terminal nécessite cependant l'intervention de l'utilisateur pour la réception de pages de caractères de type vidéotex. De plus, il n'est pas possible de transmettre à distance, à un correspondant qui n'est pourvu que d'un télécopieur, de telles pages de caractères.

C'est pourquoi il est prévu une deuxième forme de réalisation qui offre ces possibilités.

Dans la deuxième forme de réalisation, le terminal comprend:
- des moyens de détection d'un appel, disposés sur ladite ligne téléphonique,
- des moyens pour raccorder ladite ligne téléphonique audit accès du modem, en réponse à un appel détecté,
- des moyens, reliés à la sortie dudit modem, pour détecter une demande de transmission de premières données graphiques, et pour commander, en cas de demande de transmission de premières données graphiques, lesdits moyens d'impression afin qu'ils impriment lesdites premières données graphiques,
- des moyens d'alarme, et,
- des moyens reliés à la sortie dudit modem pour, en cas d'absence de détection de demandes de transmission de premières données graphiques, détecter une demande de transmission de pages de caractères, et pour commander, en cas de demande de transmission de pages de caractères, des moyens de réception de ces pages de caractères, et pour commander, en cas d'absence de demande de transmission de pages de caractères, lesdits moyens d'alarme.

Le terminal répond automatiquement à chaque appel, et, quelle que soit l'origine de cet appel, télécopieur, serveur vidéotex ou simplement autre personne, cet appel est aiguillé convenablement sans intervention manuelle, et sans que l'utilisateur n'ait à renoncer à la possibilité de recevoir des appels relatifs à de simples conversations téléphoniques.

Avantageusement, lesdits moyens de réception des pages de caractères comprennent lesdits moyens d'impression.

Dans ce cas, le terminal de l'invention permet la remise automatique d'informations émises par un serveur vidéotex.

Avantageusement encore, il est prévu des moyens, reliés à la sortie dudit modem, pour convertir en données graphiques des données représentant des caractères à afficher sur ledit écran et pour transmettre lesdites données graphiques en vue de la restitution à distance desdits caractères.

Dans ce cas, le terminal permet d'émettre directement, sous forme de données graphiques, les pages de caractères ou de symboles semi-graphiques de type vidéotex, vers un autre télécopieur par exemple. Une telle transmission est de très bonne qualité, dans la mesure où les données graphiques émises ne résultent pas, comme habituellement, d'une analyse par balayage optique ("scanning") d'un ou plusieurs documents, mais ne subissent que des traitements informatiques qui n'en dégradent pas la qualité

La présente invention sera mieux comprise grâce à la description suivante des deux formes de réalisation préférées du terminal de l'invention, faite en se référant aux dessins annexés, sur lesquels:
- la figure 1 représente un schéma par blocs de la première forme de réalisation du terminal de l'invention,
- la figure 2 est un diagramme explicatif du mode de transmission des données par le modem du terminal de la figure 1, et,
- la figure 3 représente un schéma par blocs de la deuxième forme de réalisation du terminal de l'invention.

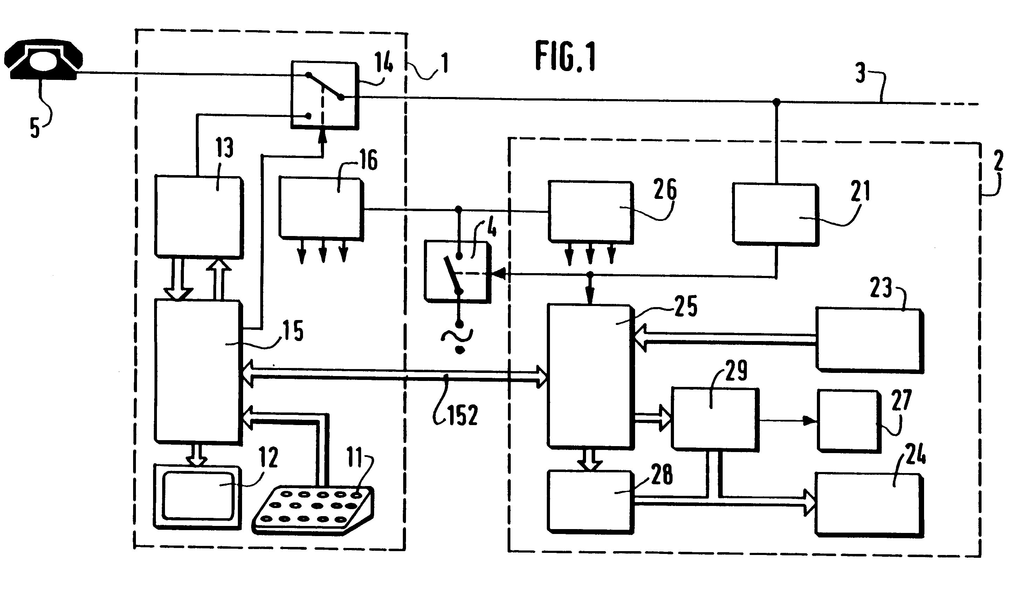

En se référant à la figure 1, un terminal vidéotex de type "Minitel", et permettant de recevoir et d'émettre des documents par télécopie, est maintenant décrit.

Ce terminal comprend, de façon connue, un inverseur commandable 14 pourvu d'un contact fixe relié à une ligne téléphonique 3, et de deux contacts mobiles dont l'un est relié à un combiné téléphonique 5 pour permettre à l'abonné utilisateur de la ligne 3 d'établir une connexion avec un autre abonné pour une conversation téléphonique normale ou une connexion avec un centre serveur non représenté, mais également raccordé au réseau téléphonique auquel appartient la ligne 3, en vue d'un échange ou session avec ce centre serveur par l'intermédiaire du terminal "Minitel". La ligne 3 est ici une ligne du réseau téléphonique commuté et les signaux qu'elle transporte sont donc analogiques.

Le deuxième contact mobile de l'inverseur 14 est relié à l'accès bidirectionnel analogique d'un modem 13. Le modem 13, ou modulateur-démodulateur est un circuit bien connu de l'homme du métier, qui en plus de son accès bidirectionnel déjà mentionné, est pourvu d'une entrée et d'une sortie numériques ici raccordées à un circuit de gestion 15. Le modem 13 est agencé pour moduler, selon les données numériques incidentes sur son entrée numérique, un signal analogique émis sur la ligne 3, par l'intermédiaire de son accès bidirectionnel, et pour, inversement, démoduler tout signal analogique incident sur son accès bidirectionnel afin de restituer, sur sa sortie numérique, les données numériques modulant ce signal analogique.

Le circuit de gestion 15 est pourvu d'une entrée numérique reliée à un clavier de commande 11, d'une sortie numérique reliée à un écran de visualisation 12 et d'une sortie binaire reliée à l'entrée de commande de l'inverseur 14. Le circuit de gestion 15 présente également un accès bidirectionnel numérique relié à une connexion 152.

Un circuit 16 d'alimentation en énergie électrique du modem 13, de l'écran 12, du clavier 11 et du circuit de gestion 15 est relié par l'intermédiaire d'un interrupteur commandable 4, au réseau secteur, par exemple 220V-50Hz. Dans un souci de simplicité les connexions entre le circuit 16 et les circuits qu'il alimente n'ont pas été représentées.

Il est à noter qu'un terminal du type "Minitel" actuellement connu comprend principalement l'inverseur 14, le modem 13, l'écran 12, le clavier 11, le circuit de gestion 15 et le circuit d'alimentation 16 qui viennent d'être décrits. Pour cette raison cet ensemble a été regroupé dans un bloc unique portant la référence 1 sur les dessins. L'accès bidirectionnel du circuit de gestion 15 est la prise péri-informatique prévue sur le terminal pour le raccordement de dispositifs périphériques.

Selon l'invention, il est prévu d'adjoindre, à ce terminal connu, les circuits et dispositifs regroupés dans le bloc portant la référence 2 sur les dessins, et qui vont être maintenant décrits.

Ils comprennent tout d'abord un détecteur de sonnerie 21, disposé sur la ligne 3. La sortie binaire du détecteur 21 est reliée d'une part à l'entrée de commande de l'interrupteur 4, et d'autre part à une entrée binaire d'un circuit de gestion 25.

Le circuit de gestion 25 est également pourvu d'un accès bidirectionnel numérique relié à la connexion 152, d'une entrée numérique reliée à un dispositif 23 d'analyse de documents, d'une première sortie numérique reliée à un circuit 29 de détection de demande de transmission de données graphiques, et d'une deuxième sortie numérique reliée à un circuit de conversion 28.

Le circuit 29 de détection de demande de transmission de données graphiques est pourvu d'une sortie numérique reliée à l'entrée d'un dispositif 24 d'impression de documents, et d'une sortie binaire reliée à un circuit 27 d'alarme sonore.

Le circuit de conversion 28 est pourvu d'une sortie numérique également reliée à l'entrée du dispositif 24 d'impression de documents. Il convertit des données relatives à des caractères ou à des symboles semi-graphiques comme ceux affichés sur l'écran 12 en données graphiques destinées au dispositif 24 d'impression de documents.

Ce dispositif 24 d'impression comprend ici une imprimante thermique et ses circuits associés, du type de celle actuellement rencontrée dans les télécopieurs et de très bonne résolution, typiquement de l'ordre de 8 points par millimètre.

Un circuit 26 d'alimentation en énergie électrique des circuits du bloc 2, à l'exclusion du circuit 21 de détection de sonnerie,est relié par l'intermédiaire de l'interrupteur commandable 4, au réseau secteur. Dans un souci de simplicité les connexions entre le circuit 26 et les circuits qu'il alimente n'ont pas été représentées.

Le terminal qui vient d'être décrit fonctionne comme cela va maintenant être décrit.

On considère tout d'abord le cas de communication établies à l'initiative de l'utilisateur du terminal. Dans ce cas, celui-ci établit la communication de façon habituelle, et lorsqu'il souhaite envoyer ou recevoir un document par télécopie, il commande, par le clavier 11, les circuits de gestion 15 et 25, ainsi que le circuit 29, afin qu'ils relient le dispositif d'analyse 23 à l'entrée du modem 13, ou le dispositif d'impression à la sortie de ce même modem 13.

Dans chacun de ces cas, la procédure de communication de données graphique comprend des phases de protocole, au cours desquelles le terminal et ladite source échangent des questions et des réponses sous forme de données transmises à la vitesse V₁ de 1200 bauds par l'intermédiaire du modem 13 utilisé alternativement dans un sens et dans l'autre, phases de protocole encadrant des phases de transfert, au cours desquelles un flux de données graphiques est transmis à la vitesse V₁ de 1200 bauds. Dans le cas de l'émission d'un document par le terminal, le destinataire peut réguler le flux émis en envoyant des données de régulation à la vitesse V₁ de 75 bauds. Dans le cas de la réception d'un document par le terminal, celui-ci peut envoyer des données de régulation à 75 bauds vers l'émetteur du document. Le protocole est semblable à celui bien connu utilisé pour la télécopie, à ceci près que, comme le transfert ne peut ici s'effectuer qu'à une unique vitesse, en l'occurrence 1200 bauds, l'étape d'essai ("training") se trouve supprimée. Le retournement de sens du modem 13, identique à celui qui est effectué dans le terminaux connus, est commandé par le circuit 15 de façon non représentée dans un souci de simplicité.

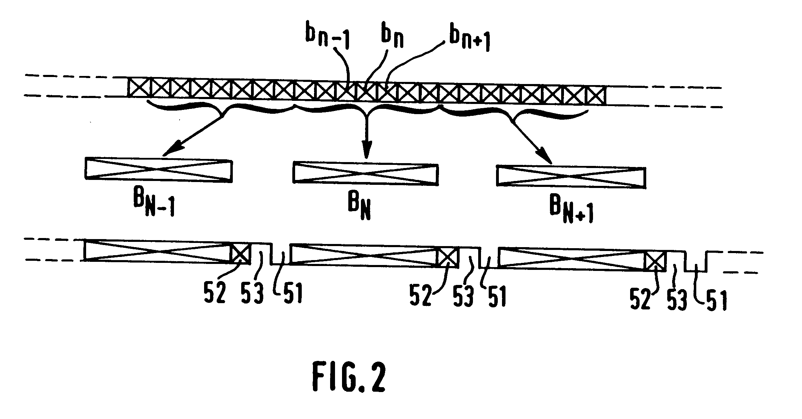

Comme le montre la figure 2, les données graphiques à transmettre sont sous la forme d'une suite d'éléments binaires ...bₙ₋₁, bₙ, bₙ₊₁,...résultant de l'analyse, pixel par pixel, de l'image à transmettre, et de la compression, effectuée de manière bien connue de l'homme du métier, des informations résultant de cette analyse. Comme le modem 13 et ses circuits associés sont agencés ici pour transmettre des groupes de 7 bits,la suite ...bₙ₋₁, bₙ, bₙ₊₁,...est décomposée en une pluralité de groupes de 7 bits ...B_{N-1}, B_{N}, B_{N+1}..., et chacun desdits groupes est transmis séparément par le modem 13, précédé par un bit de synchronisation 51, et suivi d'un bit de parité 52 et d'un bit d'arrêt 53. La suite est ensuite recomposée en vue de la restitution de l'image d'origine.

En revenant maintenant à la figure 1, on considère le cas de communications établies à l'initiative d'un demandeur inconnu.

Lorsque le terminal est au repos, l'interrupteur 4 est ouvert et l'inverseur 14 est dans la position représentée sur la figure 1, où le combiné 5 est raccordé à la ligne 3.

Seul le circuit 21 de détection de sonnerie est opérationnel. Il peut être alimenté par le réseau lui même, ou, si besoin est, par une batterie tampon.

Lorsqu'un appel arrive sur la ligne, le combiné 5 se met à sonner, mais assez brièvement, comme cela va être mieux compris dans la suite. Le signal de sonnerie est en effet détecté dans le circuit 21. Il en résulte, par l'intermédiaire de l'interrupteur 4, la mise sous tension de l'ensemble du terminal.

Le circuit de gestion 25 demande alors, par l'intermédiaire de la connexion 152, au circuit de gestion 15 de raccorder l'accès bidirectionnel du modem 13 à la ligne 3, par la commande appropriée de l'inverseur 14. Le combiné 5 cesse donc de sonner.

Le modem 13 reçoit alors les signaux analogiques sur la ligne 3, signaux qu'il démodule et qui sont alors transmis, par l'intermédiaire du circuit 15, de la connexion 152 et du circuit 25, au circuit 29. Celui-ci détecte une éventuelle demande de transmission de données graphiques en tentant d'engager, avec le terminal demandeur, le protocole spécifique à la transmission de données graphiques.

En l'absence de demande de transmission de données graphiques,le circuit 29 ne parvient pas à engager le protocole. C'est que l'appel concerne alors une simple conversation téléphonique. C'est la raison pour laquelle, dans ce cas, le circuit 29 commande le circuit 27 pour que l'utilisateur, averti par l'alarme, décroche le combiné 5, le raccorde en actionnant manuellement l'inverseur 14 et engage la conversation.

A l'issue de celle-ci, l'utilisateur laisse l'inverseur 14 dans cet état, et une temporisation, non représentée dans un souci de simplicité, provocant l'ouverture de l'interrupteur 4, le terminal se retrouve dans l'état de repos.

En cas d'absence de l'utilisateur, le demandeur, n'obtenant pas de réponse, va finir par raccrocher et libérer la ligne 3. Le terminal revient à l'état de repos après un certain temps, l'inverseur 14 étant basculé pour raccorder la ligne 3 au modem, ce qui ne pose pas de problème particulier.

Si, par contre, le circuit 29 parvient à engager le protocole, il commande le circuit d'impression 24 afin que le document transmis soit imprimé.

Naturellement, les terminaux du type qui vient d'être décrit peuvent échanger des documents entre eux et avec les bases de données graphiques qui ont été prévues à cet effet.

Si l'on souhaite que ces terminaux puissent également échanger des documents avec des télécopieurs de type classique, il est possible de prévoir un serveur qui se charge de faire la conversion de protocole entre les terminaux de l'invention et les télécopieurs de type classique. Dans le cas où l'utilisateur du terminal désire appeler un télécopieur conventionnel, il compose le numéro du serveur, suivi du numéro du télécopieur. Le serveur se charge d'établir la communication avec le télécopieur et régule ensuite les flux de données afin que le transfert se déroule convenablement. Dans le cas où l'utilisateur du télécopieur conventionnel désire transmettre un document à l'utilisateur d'un terminal conforme à celui de l'invention, il passe également par l'intermédiaire du serveur. Avec un plan de numérotation adéquat, il est même possible d'automatiser cette procédure de façon à ce que le demandeur n'ait pas à se soucier de la nature de l'appareil que possède son correspondant. Un boîtier de conversion de protocole peut aussi être adjoint au terminal de l'invention, si l'utilisateur désire pouvoir communiquer avec des télécopieurs conventionnels sans passer par l'intermédiaire du serveur de conversion.

Pour faire de la recopie d'écran "Minitel", l'utilisateur commande le raccordement du circuit de conversion 28 à la sortie du modem 13, pour convertir en données graphiques des données représentant des caractères affichés sur l'écran 12, et l'impression par le dispositif d'impression 24 afin qu'ils restitue une copie de l'écran 12 en réponse aux données converties.

Naturellement, le système de réponse automatique qui a été décrit n'est pas obligatoire, et il peut être prévu que les documents à destination d'un tel terminal sont adressés à un service de messageries que l'utilisateur du terminal vient régulièrement consulter.

De même, le dispositif 23 d'analyse de documents n'est pas indispensable à tous les utilisateurs, et il peut dans certains cas être supprimé.

Le dispositif d'impression thermique qui a été décrit n'est évidemment pas limitatif, et tout système d'impression procurant une résolution suffisante peut naturellement être utilisé, comme par exemple une imprimante laser.

Naturellement, comme sur un télécopieur de type conventionnel, il est possible, si le terminal est pourvu d'un dispositif d'analyse, d'effectuer des copies locales de documents.

Le terminal qui vient d'être décrit est raccordé au réseau téléphonique commuté, mais il est à la portée de l'homme du métier de le modifier pour un raccordement à un réseau numérique comme le réseau numérique à intégration de services ("R.N.I.S").

Dans la description qui vient d'être faite, on a fait apparaître, dans un souci de clarté, des blocs distincts pour chacune des fonctions importantes réalisée dans le terminal de l'invention. Il est évident que, dans la pratique, un seul circuit de calcul, par exemple un microprocesseur peut assumer à lieu seul un certain nombre de ces fonctions. La programmation d'un tel microprocesseur, ainsi que la conception des circuits dont le fonctionnement vient d'être décrit est à la portée de l'homme du métier.

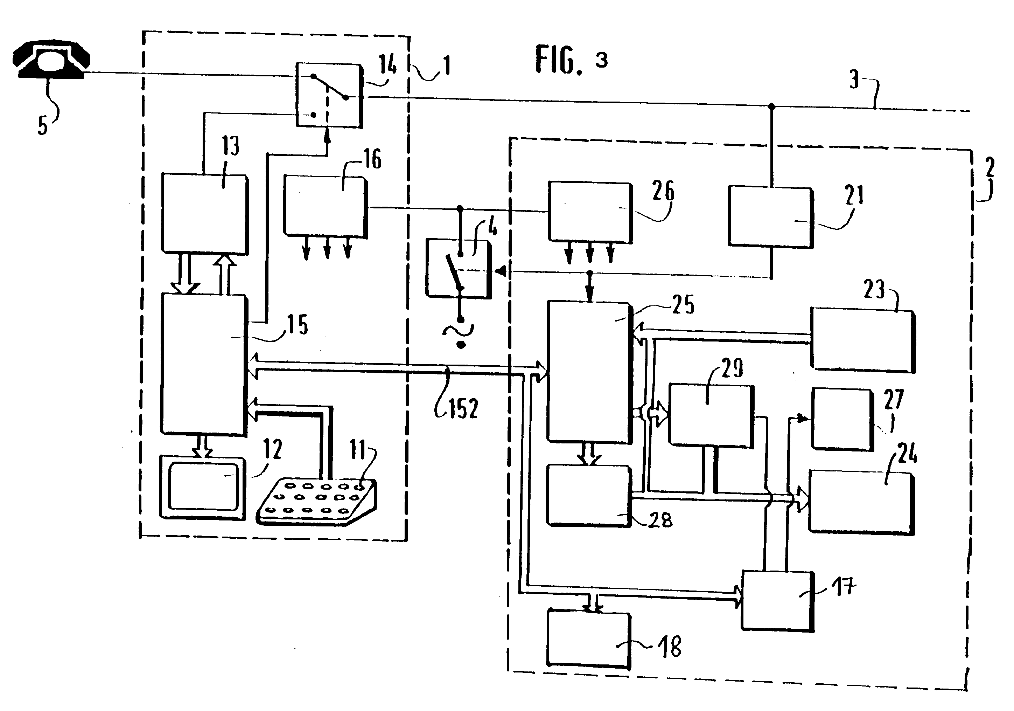

En se référant maintenant à la figure 3, le terminal de l'invention comprend, dans sa deuxième forme de réalisation, les mêmes éléments, désignés par les mêmes références et agencés de la même façon que dans sa première forme de réalisation de la figure 1, à ceci près que:
- il est prévu, dans le bloc 2, un circuit 17 de détection d'une demande de transmission de pages de caractères par un serveur vidéotex, circuit 17 pourvu d'un accès bidirectionnel relié à la connexion 152, d'une entrée binaire et d'une sortie binaire,
- il est prévu, également dans le bloc 2, un circuit 18 de réception et de mémorisation de pages de caractères pourvu d'un accès bidirectionnel relié à la connexion 152,
- la sortie binaire du circuit 29 n'est plus reliée au circuit d'alarme 27, mais à l'entrée binaire du circuit 17, dont la sortie binaire est, elle, reliée au circuit d'alarme 27, et,
- la sortie du circuit 28 est reliée à l'entrée numérique du circuit 25 qui reçoit déjà le signal de sortie du dispositif 23.

Le dispositif qui vient d'être décrit fonctionne comme suit.

Lorsqu'un appel arrive sur la ligne, le terminal se comporte comme le terminal de la première forme de réalisation, à ceci près que, en l'absence de demande de transmission de données graphiques, le circuit 29 commande le circuit 17 pour que celui-ci détecte, le cas échéant, une demande de transmission de pages de caractères, en essayant d'engager, avec le demandeur, un protocole vidéotex spécifique à une telle transmission. Si le circuit 17 parvient à engager ce protocole, il commande par l'intermédiaire de la connexion 152, par exemple, le circuit 18 de réception et de mémorisation afin que celui-ci reçoive et mémorise ces pages de caractères, que l'utilisateur pourra venir consulter par la suite.

En l'absence de demande de transmission de pages de caractères, le circuit 17 commande le circuit d'alarme 27 de façon à ce que l'utilisateur, averti par l'alarme, décroche le combiné 5, le raccorde en actionnant l'inverseur 14, et engage la conversation. La suite des opérations est la même que dans le terminal de la demande principale.

Le circuit 18 de réception et de mémorisation n'est pas obligatoire dans le cas où il est avantageusement prévu de faire imprimer les pages de caractères, transmises par le serveur, par le dispositif d'impression 24. Ainsi, la remise automatique d'informations vidéotex par un serveur est possible, sans qu'un circuit de mémorisation comme le circuit 18 soit nécessaire. Dans ce cas, c'est le dispositif d'impression 24 lui-même qui est utilisé pour la réception des pages de caractères.

Pour faire de la recopie d'écran "Minitel", l'utilisateur commande, comme dans le cas du terminal de la demande principale, le raccordement du circuit de conversion 28 à la sortie du modem 13, pour convertir en données graphiques des données représentant des caractères affichés sur l'écran 12, et l'impression par le dispositif d'impression 24 afin qu'il restitue une copie de l'écran 12 en réponse aux données converties. Il est également possible, du fait que la sortie du circuit 28 est reliée au circuit 25, de transmettre ces données graphiques en vue de la restitution à distance desdits caractères, par un télécopieur ou par un autre terminal du type de celui de l'invention.

## Revendications

1. Terminal vidéotex raccordable à un réseau téléphonique, pour demander et recevoir des pages de caractères en provenance d'un centre serveur également raccordé audit réseau, et comprenant:
- un clavier de commande (11),
- un écran de visualisation (12), et,
- un modem (13) pourvu d'une entrée reliée audit clavier (11), d'une sortie reliée audit écran (12), et d'un accès bidirectionnel raccordable à une ligne téléphonique (3).dudit réseau, ledit modem (13) étant normalement prévu pour transmettre des données en provenance dudit centre à une première vitesse (V₁), et des données vers ledit centre à une deuxième vitesse (V₂),
terminal caractérisé par le fait que:
- il comprend des moyens (15, 25, 29, 24), reliés à la sortie dudit modem (13), pour imprimer des images fixes en réponse à des premières données graphiques en provenance d'une source telle qu'un centre serveur graphique ou un télécopieur raccordé audit réseau, et,
- ces moyens étant adaptés pour réaliser une procédure de communication desdites premières données graphiques qui comprend des phases de protocole, au cours desquelles ledit terminal et ladite source échangent des questions et des réponses sous forme de données transmises à la dite première vitesse (V₁) par l'intermédiaire du modem (13) utilisé alternativement dans un sens et dans l'autre, et des phases de transfert, au cours desquelles un flux de premières données graphiques est transmis par ledit modem (13), à la dite première vitesse (V₁), en provenance de la source vers ledit terminal,et des données de régulation dudit flux sont transmises par ledit modem (13), à la dite deuxième vitesse (V₂), en provenance dudit terminal vers ladite source.

2. Terminal selon la revendication 1, dans lequel il est prévu:
- des moyens (21) de détection d'un appel, disposés sur ladite ligne téléphonique (3),
- des moyens (25, 15, 14) pour raccorder ladite ligne téléphonique (3) audit accès du modem (13), en réponse à un appel détecté,
- des moyens d'alarme (27), et,
- des moyens (15, 25, 29), reliés à la sortie dudit modem (13), pour détecter une demande de transmission de premières données graphiques, et pour commander, en cas de demande de transmission de premières données graphiques, lesdits moyens d'impression (24) et, en cas d'absence de détection de demande de transmission de premières données graphiques, lesdits moyens d'alarme (27).

3. Terminal selon l'une des revendications 1 ou 2, dans lequel il est prévu des moyens (15, 25, 28), reliés à la sortie dudit modem (13), pour convertir en données graphiques des données représentant des caractères à afficher sur ledit écran (12), et pour commander lesdits moyens d'impression afin qu'ils restituent une copie dudit écran (12) en réponse aux données converties.

4. Terminal selon l'une des revendication 1 à 3, dans lequel il est prévu des moyens (23, 25, 15) pour analyser des images fixes pourvus d'une sortie reliée à ladite entrée du modem (13) et délivrant des deuxièmes données graphiques, pour transmettre lesdites deuxièmes données graphiques en vue de la restitution à distance des images fixes analysées, et la procédure de communication desdites deuxièmes données graphiques est identique à celles desdites premières données graphiques, avec retournement du sens dudit modem (13).

5. Terminal selon l'une des revendications 1 à 4, dans lequel il est prévu des moyens interrupteurs (4) pour couper,pendant les périodes de repos dudit terminal, l'alimentation en énergie électrique dudit terminal, à l'exception desdits moyens (21) de détection d'appel, et lesdits moyens interrupteurs (4) sont commandés par lesdits moyens (21) de détection d'appel pour rétablir l'alimentation en énergie électrique en réponse à une détection d'appel.

6. Terminal selon l'une des revendications 1 à 5, dans lequel les données graphiques à transmettre sont sous la forme d'une suite (...bₙ₋₁, bₙ, bₙ₊₁,...) d'éléments binaires résultant de l'analyse, pixel par pixel, de l'image à transmettre, ladite suite est décomposée en une pluralité de groupes (...B_{N-1}, B_{N}, B_{N+1},...) d'éléments binaires, chacun desdits groupes (B_{N}) est transmis séparément par le modem (13), et ladite suite est recomposée après transmission dans le modem (13) en vue de la restitution de ladite image fixe.

7. Terminal selon la revendication 1, dans lequel il est prévu:
- des moyens (21) de détection d'un appel, disposés sur ladite ligne téléphonique (3),
- des moyens (25, 14) pour raccorder ladite ligne téléphonique (3) audit accès du modem (13), en réponse à un appel détecté,
- des moyens (29), reliés à la sortie dudit modem (13), pour détecter une demande de transmission de premières données graphiques, et pour commander, en cas de demande de transmission de premières données graphiques, lesdits moyens d'impression (24) afin qu'ils impriment lesdites premières données graphiques,
- des moyens d'alarme (27), et,
- des moyens (17) reliés à la sortie dudit modem pour, en cas d'absence de détection de demandes de transmission de premières données graphiques, détecter une demande de transmission de pages de caractères, et pour commander, en cas de demande de transmission de pages de caractères, des moyens (18, 24) de réception de ces pages de caractères, et pour commander, en cas d'absence de demande de transmission de pages de caractères, lesdits moyens d'alarme (27).

8. Terminal selon la revendication 7, dans lequel lesdits moyens de réception des pages de caractères comprennent lesdits moyens d'impression (24).

9. Terminal selon l'une des revendications 7 ou 8, dans lequel il est prévu des moyens (25, 28), reliés à la sortie dudit modem (13), pour convertir en données graphiques des données représentant des caractères à afficher sur ledit écran (12) et pour transmettre lesdites données graphiques en vue de la restitution à distance desdits caractères.

## Patentansprüche

1. Bildschirmtext-Endgerät, welches an ein Telephonnetz angeschlossen werden kann, um mit Zeichen versehene Seiten von einem Server-Zentrum, welches ebenfalls an das besagte Netz angeschlossen ist, anzufordern und zu erhalten, umfassend:
- eine Funktionstastatur (11)
- einen Bildschirm (12) und
- ein Modem (13) mit einem mit der besagten Tastatur (11) verbundenen Eingang, mit einem mit dem besagten Bildschirm (12) verbundenen Ausgang und mit einem bidirektionalen Zugriff, welcher mit einer Telephonlinie (3) des besagten Netzes verbunden werden kann, wobei das besagte Modem (13) normalerweise dafür vorgesehen ist, um Daten von dem besagten Zentrum weg mit einer ersten Geschwindigkeit (V₁) zu übertragen und Daten zu dem besagten Zentrum hin mit einer zweiten Geschwindigkeit (V₂) zu übertragen,
Endgerät dadurch gekennzeichnet, daß:
- es mit dem Ausgang des besagten Modems (13) verbundene Mittel (15, 25, 29, 24) umfaßt, um Einzelbilder zu drucken als Antwort auf erste graphische Daten, welche aus einer Quelle wie einem graphischen Server-Zentrum oder einem an das besagte Netz angeschlossenen Fernkopierer stammen, und wobei diese Mittel geeignet sind, um ein Kommunikationsverfahren der besagten ersten graphischen Daten zu realisieren, welches Protokollphasen umfaßt, während welcher das besagte Endgerät und die besagte Quelle Fragen und Antworten austauschen in Form von Daten, welche mit der ersten Geschwindigkeit (V₁) über das abwechselnd in der einen und in der anderen Richtung verwendete Modem (13) übertragen werden, und Übertragungsphasen, während welcher ein Fluß erster graphischer Daten von dem besagten Modem (13) mit der ersten Geschwindigkeit (V₁) von der Quelle weg zu dem besagten Endgerät hin übertragen wird, und Regelungsdaten des besagten Flusses von dem besagten Modem (13) mit der zweiten Geschwindigkeit (V₂) von dem besagten Endgerät weg zu der besagten Quelle hin übertragen werden.

2. Endgerät gemäß Anspruch 1, bei welchem vorgesehen sind:
- Anruferkennungsmittel (21), welche auf der besagten Telephonlinie (3) angeordnet sind,
- Mittel (25, 15, 14), um die besagte Telephonlinie (3) als Antwort auf einen erkannten Anruf an den besagten Zugriff des Modems (13) anzuschließen,
- Alarmvorrichtungen (27) und
- Mittel (15, 25, 29), welche mit dem Ausgang des besagten Modems (13) verbunden sind, um eine Aufforderung zur Übertragung erster graphischer Daten zu erkennen und um im Fall einer Aufforderung zur Übertragung erster graphischer Daten die besagten Druckmittel (24) zu steuern und bei Nichtvorhandensein einer Erkennung einer Aufforderung zur Übertragung erster graphischer Daten die besagten Alarmmittel (27) zu steuern.

3. Endgerät gemäß einem der Ansprüche 1 oder 2, bei welchem Mittel (15, 25, 28) vorgesehen sind, die mit dem Ausgang des besagten Modems (13) verbunden sind, um Daten, welche Zeichen darstellen, die auf dem besagten Schirm (12) angezeigt werden sollen, in graphische Daten umzuwandeln und um die besagten Druckmittel zu steuern, damit diese als Antwort auf die umgewandelten Daten eine Kopie des besagten Schirms (12) ausgeben.

4. Endgerät gemäß einem der Ansprüche 1 - 3, bei welchem Mittel (23, 25, 15) zur Analyse von Einzelbildern vorgesehen sind, die mit einem mit dem besagten Eingang des Modems (13) verbundenen Ausgang versehen sind und zweite graphische Daten liefern, um die besagten zweiten graphischen Daten im Hinblick auf die Fernausgabe der analysierten Einzelbilder zu übertragen, und das Kommunikationsverfahren der besagten zweiten graphischen Daten identisch ist mit dem der besagten ersten graphischen Daten, mit Richtungsumkehr des besagten Modems (13).

5. Endgerät gemäß einem der Ansprüche 1 - 4, bei welchem Unterbrechungsmittel (4) vorgesehen sind, um während der Ruhezeiten des besagten Endgerätes die Stromversorgung des besagten Endgerätes zu unterbrechen, mit Ausnahme der besagten Anruferkennungsmittel (21), und die besagten Unterbrechungsmittel (4) von den besagten Anruferkennungsmitteln (21) gesteuert werden, um die Stromversorgung als Anwort auf eine Anruferkennung wiederherzustellen.

6. Endgerät gemäß einem der Ansprüche 1 - 5, bei welchem die zu übertragenden graphischen Daten die Form einer aus der Pixel-für-Pixel-Analyse des zu übertragenden Bildes resultierenden Bit-Reihe (...bₙ₋₁, bₙ, bₙ₊₁,...) aufweisen, die besagte Reihe in eine Vielheit von Bit-Gruppen (...B_{N-1}, B_{N}, B_{N+1}...) aufgeteilt ist, jede der besagten Gruppen (B_{N}) separat vom Modem (13) übertragen wird und die besagte Reihe nach Übertragung im Modem (13) reformatiert wird im Hinblick auf die Wiedergabe des besagten Einzelbildes.

7. Endgerät gemäß Anspruch 1, bei welchem vorgesehen sind:
- Anruferkennungsmittel (21), welche auf der besagten Telephonlinie (3) angeordnet sind,
- Mittel (25, 14), um die besagte Telephonlinie (3) als Antwort auf einen erkannten Anruf an den besagten Zugriff des Modems (13) anzuschließen,
- Mittel (29), welche mit dem Ausgang des besagten Modems (13) verbunden sind, um eine Aufforderung zur Übertragung erster graphischer Daten zu erkennen und um im Fall einer Aufforderung zur Übertragung erster graphischer Daten die besagten Druckmittel (24) zu steuern, damit diese die besagten ersten graphischen Daten drucken,
- Alarmvorrichtungen (27) und
- Mittel (17), welche mit dem Ausgang des besagten Modems (13) verbunden sind, um bei Nichtvorhandensein einer Erkennung von Aufforderungen zur Übertragung erster graphischer Daten eine Aufforderung zur Übertragung von Seiten mit Zeichen zu erkennen und um im Falle einer Aufforderung zur Übertragung von mit Zeichen versehenen Seiten Empfangsmittel (18, 24) für diese Seiten mit Zeichen zu steuern, und um bei Nichtvorhandensein einer Aufforderung zur Übertragung von mit Zeichen versehenen Seiten die besagten Alarmvorrichtungen (27) zu steuern.

8. Endgerät gemäß Anspruch 7, bei welchem die besagten Empfangsmittel für die mit Zeichen versehenen Seiten die besagten Druckmittel (24) umfassen.

9. Endgerät gemäß einem der Ansprüche 7 oder 8, bei welchem Mittel (25, 28), die mit dem Ausgang des besagten Modems (13) verbunden sind, vorgesehen sind, um Daten, welche Zeichen darstellen, die auf dem besagten Schirm (12) angezeigt werden sollen, in graphische Daten umzuwandeln und um die besagten graphischen Daten im Hinblick auf die Fernausgabe der besagten Zeichen zu übertragen.

## Claims

1. A videotex terminal which can be connected to a telephone network, for asking for and receiving pages of characters from a server center also connected to said network, and comprising:
a control keyboard (11),
a display screen (12), and,
a modem (13) with an input connected to the keyboard (11), an output connected to said screen (12), and a bidirectional access connectable to a telephone line (3) of said network, said modem (13) being normally provided for transmitting data from said center at a first speed (V₁) and data towards said center at a second speed (V₂), terminal characterized by the fact that it comprises means (15,25,29,24) connected to the output of said modem (13), for printing fixed images in response to first graphic data from a source such as a graphic server center or a telecopier connected to said network, and said means being adapted for carrying out a procedure for communicating said first graphic data which comprises protocol phases, during which said terminal and said source exchange questions and answers in the form of data transmitted at said first speed (V₁) via the modem (13) used alternately in one direction and in the other, and transfer phases, during which a flow of first graphic data is transmitted by said modem (13), at said first speed (V₁), from the source to said terminal, and data for regulating said flow are transmitted by said modem (13), at said second speed (V₂), from said terminal to said source.

2. The terminal as claimed in claim 1, further comprising:
means (21) for detecting a call, disposed in said telephone line (3),
means (25,15,14) for connecting said telephone line (3) to said modem access (13), in response to a detected call,
alarm means (27),
and means (15,25,29), connected to the output of said modem (13), for detecting a first graphic data transmission request, and for controlling, in the case of a first graphic data transmission request, said printing means (24) and, in the absence of detection of a first graphic data transmission request, said alarm means (27).

3. The terminal as claimed in one of claims 1 or 2, wherein means (15,25,28) are provided, connected to said modem (13) output, for converting, into graphic data, data representing characters to be displayed on said screen (12) and for controlling said printing means to reproduce a copy of said screen (12) in response to the converted data.

4. The terminal as claimed in one of claims 1 to 3, wherein means (23,25,15) are provided for analyzing fixed images, having an output connected to said modem (13) input and delivering second graphic data for transmitting said second graphic data for remotely reproducing fixed analyzed images whereby procedure for communicating said second graphic data is identical to that of said first graphic data, with reversal of the direction of said modem (13).

5. The terminal as claimed in one of claims 1 to 4, wherein switching means (4) are provided for switching off the electric power supply to said terminal during rest periods of said terminal, except for said call detection means (21), said switching means (4) being controlled by said call detection means (21) to re-establish the electric power supply in response to a call detection.

6. The terminal as claimed in one of claims 1 to 5, wherein the graphic data to be transmitted are in the form of a succession of binary elements (...bₙ₋₁, bₙ, bₙ₊₁, ...) resulting from the pixel by pixel analysis of the image to be transmitted, said succession is broken up into a plurality of groups of binary elements (...B_{N-1}, B_{N}, B_{N+1}...), each of said groups (B_{N}) is transmitted separately by the modem (13) and said succession is recomposed after transmission in the modem (13) for reproducing said fixed image.

7. The terminal as claimed in claim 1, further comprising :
call detection means (21), disposed in said telephone line (3),
means (25,14) for connecting said telephone line (3) to said modem access (13), in response to a detected call,
means (29), connected to the output of said modem (13), for detecting a first graphic data transmission request and controlling, in the case of a first graphic data transmission request, said printing means (24) so that they print said first graphic data,
alarm means (27), and
means (17) connected to the output of said modem (13) for, in the absence of a first graphic data transmission request, detecting a request for transmission of pages of characters and controlling, in the case of a request for the transmission of pages of characters, means (18,24) for receiving these pages of characters and for controlling said alarm means (27) in the absence of a request for the transmission of pages of characters.

8. The terminal as claimed in claim 7, wherein said means for receiving pages of characters comprise said printing means (24).

9. The terminal as claimed in one of claims 7 or 8, wherein means (25,28) are provided, connected to the output of said modem (13), for converting, into graphic data, data representing characters to be displayed on said screen (12) and for transmitting said graphic data for remote reproduction of said characters.
